# EUROPÄISCHE PATENTSCHRIFT

(11) **EP 1 989 239 B1**
(45) Veröffentlichungstag und Bekanntmachung des Hinweises auf die Patenterteilung: **04.05.2011**
(21) Anmeldenummer: 07704597.9
(22) Anmeldetag: 15.02.2007
(51) Int. Cl.: C08F 110/10, C08F 2/00, C10G 57/02

(54) **VERFAHREN ZUR HERSTELLUNG VON POLYISOBUTYLEN MIT EINEM GEHALT AN ENDSTÄNDIGEN DOPPELBINDUNGEN VON MEHR ALS 50% AUS EINEM TECHNISCHEN 1-BUTEN-, 2-BUTEN- UND ISOBUTEN-HALTIGEN C4-KOHLENWASSERSTOFFSTROM**
PROCESS FOR PREPARATION OF POLYISOBUTYLENE WHOSE CONTENT OF TERMINAL DOUBLE BONDS IS MORE THAN 50% FROM AN INDUSTRIAL C4 HYDROCARBON STREAM COMPRISING 1-BUTENE, 2-BUTENE AND ISOBUTENE
PROCEDE DE FABRICATION DE POLYISOBUTYLENE AYANT UNE TENEUR EN DOUBLES LIAISONS TERMINALES SUPERIEURE A 50 % A PARTIR D'UN COURANT TECHNIQUE D'HYDROCARBURES EN C4 CONTENANT DU 1-BUTENE, DU 2-BUTENE ET DE L'ISOBUTENE

(30) Priorität: 23.02.2006 EP 06110314
(43) Veröffentlichungstag der Anmeldung: 12.11.2008
(73) Patentinhaber: BASF SE, 67056 Ludwigshafen (DE)
(72) Erfinder: HANEFELD, Phillip, 69115 Heidelberg (DE); WALTER, Hans-Michael, 67251 Freinsheim (DE); KIEFER, Matthias, 67061 Ludwigshafen (DE); MACH, Helmut, 69115 Heidelberg (DE); WETTLING, Thomas, 67117 Limburgerhof (DE); SIGL, Marcus, 68167 Mannheim (DE); SCHUBERT, Markus, 67063 Ludwigshafen (DE); STEPHAN, Jürgen, 68163 Mannheim (DE); PAPP, Rainer, 67346 Speyer (DE); POPLOW, Frank, 67065 Ludwigshafen (DE)
(86) Internationale Anmeldenummer: PCT/EP2007/051471
(87) Internationale Veröffentlichungsnummer: WO 2007/096296

(56) Entgegenhaltungen:
- EP-A1- 0 742 195
- EP-A1- 0 742 234
- EP-A1- 0 945 415
- WO-A-2005/028404
- DE-A1- 10 118 634
- DE-A1- 10 361 638
- US-A- 5 300 718
- US-A- 6 075 173

## Beschreibung

Die vorliegende Erfindung betrifft ein verbessertes Verfahren zur Herstellung von Polyisobutylen mit einem Gehalt an endständigen Doppelbindungen von mehr als 50% durch Polymerisation von Isobuten unter Verwendung eines hierfür üblichen Polymerisationskatalysators aus einem technischen 1-Buten-, 2-Buten- und Isobutenhaltigen C₄-Ko-hlenwasserstoffstrom, der noch geringe Mengen 1,3-Butadien enthalten kann. Weiterhin betrifft die vorliegende Erfindung ein Verfahren zur Verringerung des Gehaltes an Oxygenaten in einem technischen 1-Buten-, 2-Buten- und Isobutenhaltigen C₄-Kohlenwasserstoffstrom, der noch geringe Mengen 1,3-Butadien enthalten kann.

Zur wirtschaftlichen Nutzung von C₄-Strömen, wie sie beispielsweise aus Crackverfahren oder durch Dehydrierung von Butanen erzeugt werden können, sind bereits verschiedene Verfahren bekannt. Dies Ausgangsströme enthalten typischerweise größere Mengen an 1,3-Butadien, 1-Buten, 2-Buten und Isobuten. Daneben sind oftmals nennenswerte Anteile an Butanen enthalten. Um einen möglichst wirtschaftlichen Prozess zu erzielen, müssen die einzelnen Komponenten jeweils zu möglichst hochpreisigen Verkaufsprodukten umgewandelt werden, ohne dass die anderen Komponenten dadurch beeinträchtigt werden. Besonders attraktiv ist hierbei noch die ganze oder teilweise Umwandlung von einer C₄-Komponente in eine andere C₄-Komponente, die einer wirtschaftlich Iohnenswerteren Verwendung zugeführt werden. Hierzu sind im allgemeinen komplexe, mehrstufige Verfahren erforderlich, in denen die Verarbeitung der einzelnen C₄-Komponenten schrittweise erfolgt. Solche Verfahren sind z.B. in der DE-A 101 18 634, EP-A 742 195 und EP-A 742 234 beschrieben.

Reines 1,3-Butadien stellt einen gefragten Monomerbaustein dar. Reines 1-Buten ist ebenfalls ein hochpreisiger Monomerbaustein, findet aber auch nach Hydroformulierung zu Valeraldehyd und anschließender Aldolkondensation und Hydrierung zu 2-Propylheptanol einen wirtschaftlich bedeutenden Auslass als Weichmacherkomponente und Tensidalkohol. Isobuten dient nach Polymerisation zu Polyisobutylen als Ausgangsmaterial für Kraft- und Schmierstoffadditive, nach Veretherung mit Methanol zu Methyltert.-butylether (MTBE) als Treibstoffkomponente sowie nach Dimerisierung zu Diisobuten und anschließender Hydrierung als klopffestes Alkylatbenzin. Dagegen ist die direkte chemische Umsetzung von 2-Buten technisch bislang unbedeutend. Sinnvoll ist hier eine Olefinmetathese mit Ethen, die 2-Buten in den wertvollen Olefinbaustein Propen umwandelt.

Aus der EP-A 671 419 ist ein Verfahren zur Herstellung von Polyisobutylen bekannt, bei dem ein praktisch halogenfreies Polyisobutylen mit einem hohen Gehalt an endständigen Doppelbindungen (Vinylidengruppen) durch Bortrifluorid-katalysierte Polymerisation des Isobutens aus einem technischen C₄-Kohlenwasserstoffstrom, dessen 1-Buten-Gehalt durch einen Vorbehandlungsschritt abgereichert wurde, erzeugt wird. Als derartiger Vorbehandlungsschritt wird beispielhaft die selektive Hydroisomerisierung genannt, wodurch 1-Buten in 2-Buten umgewandelt wird.

In der WO 2005/028404 wird ein Verfahren zur Herstellung von Valeraldehyd durch Hydroformulierung eines C₄-Stromes, welcher 1-Buten und wenigstens 15 Gew.-% Isobuten enthält, beschrieben. Der Valeraldehyd kann weiter durch Aldolkondensation und Hydrierung in 2-Propylheptanol umgewandelt werden. Der an Isobuten angereicherte Strom aus der Hydroformulierung kann unter anderem zu Erzeugung von Polyisobutylen verwendet werden.

EP 0 945 415 offenbart ein Verfahren zur Herstellung von Olefinen aus Steamcracker- oder Raffinerie-C₄-Strömen durch Extraktivdestillation von Butadien mit einem Butadien-selektiven Lösungsmittel, Selektivhydrierung von Butadienen und acetylenischen Verunreinigungen, Entfernung von Isobuten aus dem erhaltenen C₄-Strom durch Umsetzung mit einem Alkohol zur Bildung eines Ethers, Abtrennen von Oxygenat-Verunreinigungen aus dem C₄-Strom mit Adsorbermaterialien und zweistufige Metathese der Butene durch Umsetzung von 1-Buten und 2-Buten zu Propen und 2-Penten anschließendes Trennen des gebildeten Propens und 2-Pentens und der nicht umgesetzten Butene. Eine Polymerisation des Isobutens wird nicht beschrieben.

Aufgabe der vorliegenden Erfindung war es, ein Verfahren zu entwickeln, das eine möglichst vollständige und möglichst wirtschaftliche Nutzung eines technischen C₄-Stroms zur Herstellung von Polyisobutylen ermöglicht. Hierunter ist insbesondere zu verstehen, dass er Umsatz an Isobuten bei der Polymerisation zu Polyisobuten möglichst hoch liegt. Hierzu ist es erforderlich, in den eingesetzten C₄-Strömen störende Sauerstoffverbindungen, d.h. Oxygenate, insbesondere im Strom gelöstes Wasser, vor der Isobuten-Polymerisation effizient zu entfernen. Das gewonnene Polyisobutylen soll "hochreaktiv" sein, d.h. einen hohen Anteil an endständigen Doppelbindungen (Vinylidengruppen) aufweisen. Vorzugsweise sollen hierbei in einer Koppelproduktion auch noch C₅-Aldehyde erzeugt werden, wobei diese insbesondere in wirtschaftlich günstiger Weise weiter zu 2-Propylheptanol umgewandelt werden können.

Demgemäß wurde ein Verfahren zur Herstellung von Polyisobutylen mit einem Gehalt an endständigen Doppelbindungen von mehr als 50% durch Polymerisation von Isobuten unter Verwendung eines hierfür üblichen Polymerisationskatalysators aus einem technischen 1-Buten-, 2-Buten- und Isobuten-haltigen C₄-Kohlenwasserstoffstrom, der bis zu 3000 Gew.-ppm 1,3-Butadien, vorzugsweise bis zu 1000 Gew.-ppm 1,3-Butadien enthalten kann, gefunden, welches dadurch gekennzeichnet ist, dass man den Gehalt an Oxygenaten im C₄-Kohlenwasserstoffstrom vor der Polymerisation des Isobutens durch Abkühlung bei einem Druck von 1-40 bar auf eine Temperatur von weniger als 20°C, vorzugsweise weniger als 10°C, Abtrennung von sich abscheiden dem Wasser und anschließendes Inkontaktbringen mit einem anorganischen Adorptionsmittel bei einem Druck von 1 bis 40 bar und einer Temperatur von -40 bis +220°C, vorzugsweise -10 bis +150, verringert.

Unter Oxygenaten sollen hier alle sauerstoffhaltigen Verbindungen verstanden werden, die aufgrund technischer Verunreinigungen oder aufgrund des Durchlaufens von Aufarbeitungs-, Reinigungs- oder Synthesevorstufen in dem bei der Isobuten-Polymerisation einzusetzenden C₄-Strom enthalten sind oder sich angereichert haben. Typische Oxygenate sind niedermolekulare Alkohole wie Ethanol, niedermolekulare Carbonylverbindungen wie Aceton oder Acetaldehyd und vor allem Wasser. Unter "niedermolekularen" Verbindungen sollen hier vor allem organische Sauerstoffverbindungen mit 1 bis 4 Kohlenstoffatomen verstanden werden.

Die Abreicherung der Oxygenate erfolgt vorzugsweise auf 50% oder weniger, insbesondere auf 20% oder weniger, vor allem auf 5% oder weniger des ursprünglichen Wertes vor der erfindungsgemäßen Behandlung des C₄-Stromes. Die absoluten Gehalte an Oxygenaten sollten nach der erfindungsgemäßen Behandlung des C₄-Stromes in Summe weniger als 100 Gew.-ppm, vorzugsweise weniger als 50 Gew.-ppm, insbesondere weniger als 10 Gew.-ppm betragen. Die Abreicherung der Oxygenate kann so weit erfolgen, dass die verbleibenden Restmengen mit den üblichen analytischen Methoden nicht mehr nachweisbar sind.

Vorzugsweise arbeitet man hierbei bei Temperaturen von 20 bis 220°C, insbesondere von 30 bis 150°C, vor allem von 40 bis 80°C, oder vorzugsweise alternativ - abhängig von der Natur der eingesetzten anorganischen Adsorptionsmittel und den übrigen physikalischen Randbedingungen - bei Temperaturen von -40 bis +100°C, insbesondere von -30 bis +60°C, vor allem von -10 bis +40°C, und vorzugsweise bei einem Druck von 1 bis 20 bar, insbesondere von 1 bis 5 bar, vor allem von 1 bis 2 bar, oder vorzugsweise alternative - abhängig von der Natur der eingesetzten anorganischen Adsorptionsmittel und den übrigen physikalischen Randbedingungen - bei einem Druck von 5 bis 25 bar.

Das erfindungsgemäße Verfahren und seine weiteren Ausgestaltungen in den unten näher erläuterten bevorzugten Ausführungsformen werden üblicherweise kontinuierlich durchgeführt. Im Prinzip ist jedoch auch eine diskontinuierliche Fahrweise möglich.

Die Wirkungsweise des anorganischen Adsorptionsmittels im Sinne der vorliegenden Erfindung beruht offensichtlich auf einer weitgehend vollständigen Adsorption der Oxygenate bei den angegebenen Bedingungen. Gegebenenfalls werden durch das anorganische Adsorptionsmittel zusätzlich noch störende Acetylene und/oder Diene (Diolefine) aus dem C₄-Strom entfernt. Wenn in den C₄-Strömen aus dem eingesetzten Polymerisationskatalysator stammende fluor- oder chlorhaltigen Verbindungen vorhanden sind, werden diese in der Regel ebenfalls entfernt; gemäß der Lehre der aus der europäischen Patentanmeldung Az. 06 100 335.6 hervorgegangenen internationalen Anmeldung PCT/EP2007/050029 geschieht dies offensichtlich durch absorbative Spaltung von der fluor- oder chlorhaltigen Verbindungen und Bindung der fluor- bzw. chlorhaltigen Bruchstücke auf der Oberfläche des anorganischen Adsorptionsmittels.

Das anorganische Adsorptionsmittel umfasst in der Regel Oxide und Salze wie Halogenide, insbesondere Chloride, Sulfate, Phosphate, Carbonate oder Nitrate von Silizium, Aluminium, Zirkonium, Calcium und/oder Titan, welche diverse Dotierungen aufweisen können. Meist setzt man Aluminiumoxide, Aluminiumhalogenide, Zirkoniumoxide, Titanoxide, Calciumoxide, Silikate, Alumosilikate, Zeolithe oder Mischungen hieraus ein. Derartige Adsorptionsmittel können auch in Form von Molsieben vorliegen. Vorzugsweise arbeitet man mit Aluminiumoxid, Zeolithen und Kombinationen davon. Das eingesetzte Aluminiumoxid kann insbesondere mit einer Base, z. B. einem Alkali- oder Erdalkalimetallhydroxid oder einem Alkali- oder Erdalkalimetallcyanid, dotiert sein.

Das anorganische Adsorptionsmittel kann einen sauren, einen neutralen oder einen basischen Charakter haben. Besonders gut geeignete anorganische Adsorptionsmittel sind solche, die auf ihrer Oberfläche neben sauren oder schwach sauren Bereichen auch basische oder schwach basische Bereiche aufweisen; letzte sind beispielsweise in der Lage, abgespaltenen Fluorwasserstoff bzw. Chlorwasserstoff kovalent zu binden. Durch eine effiziente Entfernung des Fluorwasserstoffs bzw. Chlorwasserstoffs wird insbesondere die unerwünschte säurekatalysierte Strukturisomerisierung von 1-Buten zu 2-Buten unterbunden.

In einer bevorzugten Ausführungsform umfasst das anorganische Adsorptionsmittel einen Zeolith mit mittleren Porengrößen von mindestens 5 Å, insbesondere von 5 bis 15 Å. Die mittlere Porengröße ist durch den Kristallaufbau des Zeoliths festgelegt und kann z. B. aus Röntgenstrukturdaten ermittelt werden. In Zeolithe mit kleineren mittleren Porengrößen können die zu entfernenden fluorhaltigen Verbindungen schlecht eindiffundieren und werden daher unzureichend adsorbiert oder gespalten. Vorzugsweise sind die verwendeten Zeolithe im wesentlichen säurefrei.

Bevorzugte Zeolithe sind unter Zeolith A, Zeolith L, Zeolith X und Zeolith Y ausgewählt. Natrium-Zeolith A oder Natrium-Zeolith A, in dem die Natriumionen ganz oder teilweise durch Magnesium- und/oder Calciumionen ersetzt sind, ist besonders bevorzugt. Ein weiterer besonders bevorzugter Zeolith ist Zeolith 10 A (im Handel beispielsweise erhältlich von der Firma Zeochem unter der Bezeichnung Z10-03), welcher schon eine hohe absorbative Leistung bei vergleichsweise niedrigen Temperaturen zeigt.

Bei der Zeolith-Behandlung werden vermutlich die gegebenenfalls zu entfernenden fluor- oder chlorhaltigen Verbindungen gespalten und die fluor- bzw. chlorhaltigen Spaltprodukte wie Fluorwasserstoff oder Chlorwasserstoff am Zeolith adsorbiert bzw. durch die darin enthaltenen Kationen chemisch gebunden. Um eine unerwünschte Aktivierung und/oder strukturelle Veränderung des Zeoliths zu verhindern, ist es möglich, den Fluorwasserstoff bzw. Chlorwasserstoff durch Zusatz eines Säurefängers, z. B. eines Amins oder eines Nitrils, zu binden.

In einer weiteren bevorzugten Ausführungsform umfasst das anorganische Adsorptionsmittel ein Aluminumoxid. Aluminiumoxide sind als Adsorptionsmittel für Gase, Flüssigkeiten und Feststoffe insbesondere bei chromatographischen Verfahren und Methoden bekannt. Man kann für das erfindungsgemäße Verfahren zur Entfernung von fluor- oder chlorhaltigen Verbindungen saure, neutrale oder basische Aluminiumoxide einsetzen, insbesondere eignen sich hierfür basische Aluminiumoxide. Saure Aluminiumoxide weisen meist einen pH-Wert von 3 bis 6, typischerweise von ca. 4, auf. Neutrale Aluminiumoxide weisen meist einen pH-Wert von 6 bis 8, typischerweise von ca. 7, auf. Basische Aluminiumoxide weisen meist einen pH-Wert von 8 bis 11, typischerweise von ca. 9,5, auf.

Die genannten Aluminiumoxide haben in der Regel Porenvolumina von 0,5 bis 1,5 ml/g, typischerweise von ca. 0,9 ml/g, in der Regel innere Oberflächen von 70 bis 250 m²/g, typischerweise von ca. 150 m²/g, und in der Regel Partikelgrößen im Bereich von 30 bis 300 µm, typischerweise von 60 bis 150 µm.

Weitere bevorzugte anorganische Adsorptionsmittel sind ein 13X-Molsieb oder hochoberflächige gamma-Aluminiumoxide (z. B. Selexsorb® der Fa. Almatis).

Das anorganische Adorptionsmittel wird zweckmäßigerweise vor seinem Einsatz aktiviert, indem man es üblicherweise unter vermindertem Druck auf eine Temperatur von wenigstens 150°C erwärmt oder indem man üblicherweise bei Normaldruck und bei einer Temperatur von wenigstens 150°C trockenen gasförmigen Stickstoff oder ein vergleichbares inertes Gas oder Gasgemisch hindurchleitet.

Das Inkontaktbringen der technischen C₄-Kohlenwasserstoffströme mit dem anorganischen Adsorptionsmittel kann durch alle hierfür denkbaren diskontinuierlichen oder kontinuierlichen Verfahren erfolgen. Üblicherweise leitet man die in der Regel gasförmigen oder auch - beim Arbeiten unter Druck - flüssig auftretenden technischen C₄-Kohlenwasserstoffströme über das als Feststoff vorliegende anorganische Absorptionsmittel, wobei das Absorptionsmittel im wesentlichen in seiner Position in der Apparatur oder Anlage fixiert ist (Absorberbett-Fahrweise). Vorzugsweise liegt das Adsorptionsmittel in einer Festbettschüttung vor, die in einer Adsorptionssäule angeordnet ist, durch die der Gasstrom bzw. Flüssigkeitsstrom geleitet wird. Die Adsorptionssäule ist vorzugsweise vertikal angeordnet und wird vom Gasstrom bzw. Flüssigkeitsstrom in Richtung der Schwerkraft oder vorzugsweise entgegen der Schwerkraft durchströmt. Es können auch mehrere hintereinandergeschaltete Adsorptionssäulen verwendet werden.

In einer bevorzugten Ausführungsform der vorliegenden Erfindung liegt das anorganische Adsorptionsmittel in Form eines Adsorberbettes vor, welches Aluminiumoxide, Aluminiumhalogenide, Calciumoxide, Zirkoniumoxide, Titanoxide, Silikate, Alumosilikate, Zeolithe oder Mischungen hieraus enthält.

Besonders bevorzugt ist eine Ausführungsform, bei der wenigstens zwei, vorzugsweise zwei Adsorberbetten verwendet werden, welche jeweils Aluminiumoxide, Aluminiumha-Iogenide, Calciumoxide, Zirkoniumoxide, Titanoxide, Silikate, Alumosilikate, Zeolithe oder Mischungen hieraus enthalten und die sich jeweils abwechselnd im Adsorptions- bzw. Regeneriermodus befinden. Vorzugsweise enthalten diese wenigstens zwei Adsorberbetten das gleiche anorganische Adsorptionsmittel.

In einer weiteren besonders bevorzugten Ausführungsform kühlt man den technischen C₄-Kohlenwasserstoffstrom vor dem Inkontaktbringen mit dem anorganischen Adorptionsmittel bei einem Druck von 1 bis 40 bar, insbesondere von 1 bis 5 bar, auf eine Temperatur von weniger als 20°C, vorzugsweise weniger als 10°C, ab und trennt sich abscheidendes Wasser ab. Typische Bedingungen für diese Ausführungsform sind eine Abkühlung auf 0 bis 7°C bei 1 bis 3 bar. Die Abkühlung erfolgt zweckmäßigerweise mittels Wärmetauschern mit Kühlflüssigkeit, die Wasserabscheidung wird in der Regel mittels absorbierender Materialien wie Alkali- oder Erdalkalisalzen oder Zeolithen an einem Festbettabsorber durchgeführt.

Die beschriebene Behandlung mit dem anorganischen Adsorptionsmittel zur Entfernung von störenden Oxygenaten sowie gegebenenfalls zusätzlich von Acetylenen und/oder Dienen (Diolefinen) kann in vorteilhafter Weise mit anderen üblichen Reinigungsverfahren wie insbesondere einem Druckwechselverfahren (Pressure-Swing-Adsorption) oder einer Selektivhydrierung, die vor allem noch Restspuren von Dienen (Diolefinen) und Acetylenen entfernt, kombiniert werden.

Als bei der Polymerisation des Isobutens einzusetzende technische C₄-Kohlenwasserstoffströme eignen sich insbesondere sog. Raffinate (Raffinat I oder II). Solche Raffinate und analoge C₄-Kohlenwasserstoffströme sind zweckmäßigerweise nach vier verschiedenen Methoden herstellbar:
Bei der ersten Methode stellt man den C₄-Strom bereit, indem man
   Ia) in Schritt la Naphtha oder sonstige Kohlenwasserstoffverbindungen einem Steamcracking- oder FCC-Prozess unterwirft und aus dem dabei gebildeten Stoffstrom eine C₄-Olefin-Mischung abzieht, die 1-Buten, 2-Buten, Isobuten und mehr als 1000 Gew.-ppm Butadiene und gegebenenfalls Butine enthält, und
   IIa) aus der in Schritt la gebildeten C₄- eine Olefin-Mischung einen im wesentlichen aus 1-Buten, 2-Buten, Isobuten und gegebenenfalls Butanen bestehenden C₄-Kohlenwasserstoffstrom (meist als Raffinat I bezeichnet) herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.
Bei der zweiten Methode stellt man den C₄-Strom bereit, indem man
   Ib) in Schritt Ib aus einem Butane enthaltenden Kohlenwasserstoffstrom durch Dehydrierung und nachfolgende Reinigung eine C₄-Olefin-Mischung herstellt, die 1-Buten, 2-Buten, Isobuten und mehr als 1000 Gew.-ppm Butadiene und gegebenenfalls Butine und gegebenenfalls Butane enthält, und
   IIb) aus der in Schritt Ib gebildeten C₄-Olefin-Mischung einen im wesentlichen aus 1-Buten, 2-Buten, Isobuten und gegebenenfalls Butanen bestehenden C₄-Kohlenwasserstoffstrom (meist als Raffinat I bezeichnet) herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.
Bei der dritten Methode stellt man den C₄-Eingangsstrom (meist in Form von Raffinat II) bereit, indem man
   Ic) aus Methanol durch Dehydrierung eine C₄-Olefin-Mischung herstellt (MTO-Verfahren), die 1-Buten, 2-Buten, Isobuten und gegebenenfalls Butadiene, Alkine und gegebenenfalls Butane enthält, und
   IIc) die C₄-Olefin-Mischung durch Destillation, Selektivhydrierung oder Extraktivdestillation von Butadienen oder Alkinen befreit.
Bei der vierten Methode stellt man den C₄-Strom bereit, indem man
   Id) in Schritt Id aus einem Olefine enthaltenden Kohlenwasserstoffstrom durch Metathese-Umsetzung und nötigenfalls nachfolgende Reinigung eine C₄-Olefin-Mischung herstellt, die 1-Buten, 2-Buten, Isobuten und gegebenenfalls Butadiene und gegebenenfalls Butine enthält, und
   IId) aus der in Schritt Id gebildeten C₄-Olefin-Mischung einen im wesentlichen aus 1-Buten, 2-Buten, Isobuten und gegebenenfalls Butanen bestehenden C₄-Kohlenwasserstoffstrom herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.

Unter "2-Buten" sollen hier sowohl cis- als auch trans-2-Buten sowie Mischungen hieraus verstanden werden.

Raffinat II weist im wesentlichen die gleiche Zusammensetzung wie Raffinat I auf, bis auf die Tatsache, dass Raffinat II geringere Mengen an Isobuten enthält. Typischerweise weist Raffinat II Mengen von weniger als 10 Gew.-%, bevorzugt weniger als 5 Gew.-% Isobuten auf. Aus diesem Grund ist diese dritten Methode zur Bereitstellung des C₄-Stroms für das erfindungsgemäße Verfahren auch von geringerer Bedeutung.

Die vierte Methode mit den Schritten Id und IId liefert üblicherweise C₄-Kohlenwasserstoffströme, die eine Isobuten-Gehalt von 70 bis 95 Gew.-%, insbesondere 80 bis 90 Gew.-% aufweisen; den Rest stellen im wesentlichen andere Butene und sonstige inerte Kohlenwasserstoffe dar. Als Olefine enthaltende Kohlenwasserstoffströme setzt man in Schritt Id in der Regel eine Olefin-Mischung als Ausgangsmaterial ein, die im wesentlichen aus Ethylen und 2-Buten besteht und bei der Metathese-Umsetzung neben Propen als Hauptprodukt auch Isobuten liefert; nach Abtrennung des Propens besteht der verbleibende Kohlenwasserstoffstrom überwiegend aus Isobuten.

Vorzugsweise wird die Extraktivdestillation in Schritt IIa, IIb, IIc oder IId mit einem Butadien-selektiven Lösungsmittel durchgeführt, welches man aus der Klasse der polaraprotischen Lösemittel, z.B. Aceton, Furfural, Acetonitril, Dimethylacetamid, Dimethylformamid oder N-Metylpyrrolidon, auswählt.

Die Selektivhydrierung in Schritt IIa, IIb, IIc oder IId kann zu einer weitgehenden Reduktion von Diolefinen und acetylenischen Verbindungen eingesetzt werden, da diese Verbindungen die nachfolgende Verfahrensstufen beeinträchtigen würden. Zudem kann durch die selektive Hydrierung einer größeren Menge von 1,3-Butadien auch die Menge an linearen Monoolefinen beträchtlich erhöht werden, was die Produktionskapazität nachfolgender Stufen erhöht. Durch geeignete Katalysatoren sowie Fahrweisen (beispielsweise das Wasserstoffangebot betreffend) lässt sich das 1-Buten zu 2-Buten-Verhältnis in der Selektivhydrierung innerhalb gewisser Grenzen steuern (sog. Hydroisomerisierung). Da insbesondere für das 1-Buten attraktive wirtschaftliche Verwertungsmöglichkeiten gegeben sind, werden 1-Buten zu 2-Buten-Verhältnisse von wenigstens 1:3, bevorzugt von wenigstens 2:3, besonders bevorzugt von mehr als 1:1 angestrebt. Vorzugsweise wird der Teilschritt Selektivhydrierung in flüssiger Phase an einem Metall, ausgewählt aus der Gruppe Nickel, Palladium und Platin, auf einem Träger, vorzugsweise Palladium auf Aluminiumoxid, bei einer Temperatur von 20 bis 200°C, einem Druck von 1 bis 50 bar, einer Volumengeschwindigkeit von 0,5 bis 30 m³ Frischfeed pro m³ Katalysator pro Stunde und einem Verhältnis von Recycle zu Zustrom von 0 bis 30 mit einem Molverhältnis von Wasserstoff zu Diolefinen von 0,5 bis 50 durchgeführt.

Sofern der Gehalt an 1,3-Butadien in der gemäß Schritt la, Ib, Ic oder Id gewonnenen C₄-Olefin-Mischung 5 Gew.-% oder mehr beträgt, senkt man üblicherweise den Gehalt an 1,3-Butadien mittels Extraktivdestillation auf einen Gehalt zwischen 1000 Gew.-ppm und 5 Gew.-% ab und senkt den Gehalt an 1,3-Butadien anschließend mittels Selektivhydrierung weiter auf 1000 Gew.-ppm oder weniger ab.

Bevorzugt weist der bei der Polymerisation des Isobutens einzusetzende technische C₄-Kohlenwasserstoffstrom ein Vol.-Verhältnis 1-Buten zu 2-Buten von 3 : 1 bis 1 : 3 auf.

Der Gehalt an 1,3-Butadien im bei der Polymerisation des Isobutens einzusetzenden technischen C₄-Kohlenwasserstoffstrom beträgt bevorzugt weniger als 3000, besonders bevorzugt weniger als 1000, insbesondere weniger als 100 Gew.-ppm.

Im Allgemeinen enthält der bei der Polymerisation des Isobutens einzusetzende technische C₄-Kohlenwasserstoffstrom, welcher vorzugweise ein Raffinat I-Strom ist, 2 bis 35, vorzugsweise 5 bis 30 Gew.-% Butane, 10 bis 40, vorzugsweise 10 bis 30 Gew.-% 2-Buten, 10 bis 50, vorzugsweise 15 bis 35 Gew.-% 1-Buten, 30 bis 50, vorzugsweise 35 bis 45 Gew.-% Isobuten und 20 bis 2000, vorzugsweise 20 bis weniger als 1000 Gew.-ppm Butadiene.

In einer bevorzugten Ausführungsform der vorliegenden Erfindung führt man bei der Bereitstellung des bei der Polymerisation des Isobutens eingesetzten technischen C₄-Kohlenwasserstoffstromes als zusätzlichen Schritt III eine Hydroformylierung des aus Schritt IIa bzw. IIb bzw. IId gewonnenen C₄-Kohlenwasserstoffstromes in Gegenwart eines üblichen Hydroformylierungskatalysators mit Wasserstoff und Kohlenmonoxid durch und trennt die dabei gebildeten C₅-Aldehyde vom resultierenden C₄-Kohlenwasserstoffstrom ab.

Die Hydroformylierung kann im Allgemeinen in der für den Fachmann üblichen und bekannten Art und Weise durchgeführt werden. Eine gute Übersicht mit zahlreichen weiteren Literaturstellen findet sich beispielsweise in M. Beller et al., Journal of Molecular Catalysis A, 104, 1995, Seiten 17 bis 85 oder in Ullmann's Encyclopedia of Industrial Chemistry, 6^{th} edition, 2000 electronic release, Chapter "Aldehydes, Aliphatic and Araliphatic - Saturated Aldehydes". Die dort gegebenen Informationen ermöglichen es dem Fachmann, sowohl die linearen als auch die verzweigten Alkene zu hydroformylieren.

Die Hydroformylierung von 1-Buten zu n-Valeraldehyd, dem Hauptbestandteil der in der Hydroformylierungsstufe des erfindungsgemäßen Verfahrens gebildeten C₅-Aldehyd-Mischung, wird insbesondere in der EP-A 016 286 beschrieben.

Bei der Hydroformylierung wird übergangsmetallkatalysiert aus dem 1-Buten unter Zusatz von Synthesegas (Kohlenmonoxid-Wasserstoff-Mischung, üblicherweise im Vol.-Verhältnis von 3 : 1 bis 1 : 3, vorzugsweise 1,5 : 1 bis 1 : 1,15) n-Valeraldehyd (n-Pentanal) hergestellt. In geringen Mengen können aus anderen Komponenten des C₄-Eingangsstroms strukturisomere C₅-Aldehyde entstehen.

Als Katalysatoren für die Hydroformylierungsreaktion werden in der Regel RhodiumKomplexe mit Phosphor-haltigen Liganden eingesetzt. Typischerweise handelt es sich bei den Phosphor-haltigen Liganden um ein mono- oder di-Phosphan, bevorzugt ein Triarylphosphan, besonders bevorzugt Triphenylphosphan. Durchgeführt wird die Hydroformylierungsreaktion üblicherweise bei Temperaturen von 50 bis 150°C, vorzugsweise 70 bis 120°C, und Drücken von 5 bis 50 bar, vorzugsweise 10 bis 30 bar.

Der C₄-Strom nach der Hydroformylierung (meist als Raffinat 1 P bezeichnet) enthält üblicherweise 2 bis 25, vorzugsweise 5 bis 20 Gew.-% Butane, 25 bis 70, vorzugsweise 35 bis 55 Gew.-% 2-Buten, 1 bis 15, vorzugsweise 3 bis 10 Gew.-% 1-Buten, 30 bis 55, vorzugsweise 35 bis 50 Gew.-% Isobuten und 20 bis 1000, vorzugsweise 20 bis weniger als 300 Gew.-ppm Butadiene. Das Vol.-Verhältnis 1-Buten zu 2-Buten in diesem C₄-Strom beträgt üblicherweise 1 : 3 bis 1 : 60.

Der Umsatz des 1-Butens in der beschriebenen Hydroformylierungsreaktion ist vorzugsweise größer als 80%.

In einer weiteren bevorzugten Ausführungsform umfasst das erfindungsgemäße Verfahren die weitere Umsetzung der in der Hydroformylierungsreaktion des Schrittes III gebildeten C₅-Aldehyde zu 2-Propylheptanol. Die Umsetzung der C₅-Aldehyde zu 2-Propylheptanol, welches einen wirtschaftlich bedeutenden Auslass als Weichmacherkomponente und Tensidalkohol darstellt, bedeutet nämlich eine signifikante Erhöhung der Wertschöpfung in der Synthesesequenz.

Hauptbestandteil der in der Hydroformylierung des Schrittes III gebildeten C₅-Aldehyd-Mischung ist n-Valeraldehyd, welches zweckmäßigerweise durch Aldolkondensation und nachfolgende Hydrierung in 2-Propylheptanol umgewandelt wird. Weitere Bestandteile sind hauptsächlich zu n-Valeraldehyd isomere C₅-Aldehyde wie 2-Methylbutanal und 3-Methylbutanal.

Die Reaktionssequenz der großtechnischen Umwandlung von n-Valeraldehyd in 2-Propylheptanol ist dem Fachmann beispielsweise aus der US-A 2 921 089 und der US-A 4 426 542 bekannt und erfolgt üblicherweise in vier Schritten: (i) Aldolkondensation mittels wässrigem Alkalimetallhydroxid, (ii) Abtrennung des gebildeten Aldolkondensats von der wässrigen Phase durch Phasentrennung, (iii) Hydrierung mittels eines hierfür geeigneten Hydrierungskatalysators und gegebenenfalls (iv) Reinigung des erhaltenen 2-Propylheptanols durch fraktionierende Destillation, vorzugsweise im Vakuum.

In Schritt (i) reagiert der n-Valeraldehyd in wässriger Alkalimetallhydroxid-Lösung, welche üblicherweise eine Konzentration an Alkalimetallhydroxid von 1 bis 10 Gew.-% aufweist, beispielsweise in 2 bis 5 gew.-%iger wässriger Natronlauge, relativ rasch zum entsprechenden Aldolkondensat (2-Propyl-2-heptenal). Andere Basen als Alkalimetallhydroxid sind ebenfalls verwendbar, beispielsweise Alkalimetallcyanide. Man wendet hierfür in der Regel Temperaturen von 50 bis 200°C, insbesondere 80 bis 150°C, vor allem 90 bis 110°C an. Der Druck ist für die Umsetzung im Prinzip unkritisch, man kann sowohl bei Atmosphärendruck, unterhalb des Atmosphärendruckes als auch bei leicht erhöhten Drücken arbeiten. Vorzugsweise wird die Aldolkondensation bei Drücken unter 0,5 MPa durchgeführt. Die Umsetzung ist bereits nach wenigen Stunden praktisch vollständig, typische Reaktionsdauern sind 0,5 bis 5 Stunden, insbesondere 1 bis 3 Stunden. Die Umsätze sind in der Regel höher als 99%. Der in Schritt (i) eingesetzte Reaktor kann beispielsweise eine Mischpumpe, eine Füllkörperkolonne oder ein Rührkessel sein.

In Schritt (ii) wird das gebildete Aldolkondensat als obere organische Phase von der unteren wässrigen Phase in einer üblichen Phasentrennvorrichtung getrennt. Die wässrige Phase kann teilweise nach Zugabe von frischem Alkalimetallhydroxid wieder in Schritt (i) zurückgeführt werden.

In Schritt (iii) wird das Aldolkondensat mit Wasserstoff in Gegenwart eines hierfür geeigneten Hydrierungskatalysators, insbesondere eines heterogenen Hydrierungskatalysators, beispielsweise eines Nickel-haltigen, eines Kobalt-haltigen oder eines Kupferhaltigen Hydrierungskatalysators wie Raney-Nickel oder Kobalt auf Kieselgur, bei Temperaturen von üblicherweise 120 bis 250°C, insbesondere 150 bis 200°C, und hierfür üblichen Wasserstoffdrücken, insbesondere bei 0,5 bis 20 MPa, vor allem 1 bis 10 MPa, hydriert. Oftmals werden geringe Mengen Wasser als Promotor für die Hydrierung zugegeben. Die Hydrierung kann einstufig, beispielsweise in Festbett-Fahrweise mit einem Nickel-haltigen Hydrierungskatalysator, oder mehrstufig, beispielsweise in Gas-Flüssig-Fahrweise oder in Flüssig-Flüssig-Fahrweise, durchgeführt werden. Typischerweise führt man die Hydrierung in einem Autoklaven oder einem sonstigen Druckgefäß durch. Die Umsätze liegen üblicherweise praktisch bei 100%, die Selektivität in der Regel bei mehr als 99%.

Soll das so erhaltene 2-Propylheptanol in einem sich anschließenden Schritt (iv) gereinigt werden, wird eine fraktionierende Destillation, vorzugsweise im Vakuum, beispielsweise bei Drücken von 1 bis 70 kPa, durchgeführt.

Die Polymerisations des Isobutens selbst kann nach dem erfindungsgemäßen Konditionierungsschritt mittels einem anorganischem Adsorptionsmittel, wie oben beschrieben, im Allgemeinen in der für den Fachmann üblichen und bekannten Art und Weise durchgeführt werden. Den diesbezüglichen repräsentativen Stand der Technik spiegeln beispielsweise die Schriften US-A 4 152 499, US-A 4 605 808, US-A 5 068 490, EP-A 489 508 und EP-A 671 419 wieder.

Als Polymersationskatalysator wird vorzugsweise ein homogener oder heterogener Katalysator aus der Klasse der Bronstedt- oder Lewis-Säuren eingesetzt. Insbesondere handelt es sich bei dem Katalysator um Bortrifluorid oder Bortrifluorid-Komplexe wie Bortrifluorid-Etheraten, z.B. Bortrifluorid-Diethyletherat, oder Bortrifluorid-Alkohol-Komplexe, z.B. mit Ethanol, Isopropanol oder sec.-Butanol. Auch Zinntetrachlorid, entweder allein oder zusammen mit Mineralsäuren oder Alkylhalogeniden wie tert.-Butylchlorid als Co-Kalalysatoren, sowie wasserfreies Aluminiumchlorid können als Polymerisationskatalysatoren verwendet werden.

Der Polymerisationskatalysator wird in der Regel in Mengen von 0,001 bis 10 Gew.-%, insbesondere 0,01 bis 1 Gew.-%, bezogen auf den Isobuten-Gehalt des eingesetzten C₄-Stroms, eingesetzt.

Die Isobuten-Polymerisation wird üblicherweise bei Temperaturen von -100 bis +100°C, insbesondere von -50 bis +25°C, vor allem von -35 bis +5°C durchgeführt. Man arbeitet zweckmäßigerweise bei einem Druck von 10 bis 5000 kPa.

Die Polymerisationsreaktion wird zweckmäßigerweise durch Zugabe überschüssiger Mengen an basischem Material, beispielsweise gasförmigem oder wässrigem Ammoniak oder wässriger Alkalimetallhydroxid-Lösung wie Natronlauge, abgebrochen. Nach Abtrennung von nicht umgesetzten C₄-Monomeren wird das rohe Polymerisationsprodukt üblicherweise mit destilliertem oder entionisiertem Wasser mehrmals gewaschen, um anhaftende anorganische Bestandteile zu entfernen. Zur Erzielung hoher Reinheiten oder zur Abtrennung unerwünschter nieder- und/oder höhermolekularer Anteile kann das Polymersationsprodukt im Vakuum fraktionierend destilliert werden.

Man erzielt mit der beschriebenen Polymerisationsstufe ein im wesentlichen halogenfreies Polyisobutylen mit einem hohen Gehalt an endständigen Doppelbindungen (Vinylidengruppen) von mehr als 50%, vorzugsweise wenigstens 65%, insbesondere wenigstens 75%, vor allem wenigstens 85%. Der Restgehalt an Halogen, welches üblicherweise - je nach eingesetztem Polymerisationskatalysator - als Fluorid oder Chlorid vorliegt, beträgt meistens weniger als 10 Gew.-ppm, insbesondere weniger als 5 Gew.-ppm für Fluor bzw. meistens weniger als 50 Gew.-ppm, insbesondere weniger als 20 Gew.-ppm für Chlor.

Das so hergestellte Polyisobutylen hat in der Regel eine zahlenmittleres Molekulargewicht Mₙ von 500 bis 5000, insbesondere 700 bis 3500, vor allem 750 bis 3000, jeweils gemessen durch Gelpermeationschromatographie (GPC). Die Dispersizität (D = M_{w}/Mₙ) beträgt typischerweise weniger als 2,5, vorzugsweise weniger als 2,0 und insbesondere weniger als 1,8.

Der relative Isobutengehalt im für die Isobuten-Polymerisation verwendeten C₄-Strom wird durch die Polymerisation normalerweise um wenigstens 40%, meist sogar um wenigstens 70%, insbesondere um wenigstens 85% reduziert.

Der C₄-Strom nach der Isobuten-Polymerisation enthält typischerweise 15 bis 55, vorzugsweise 15 bis 45 Gew.-% Butane, 15 bis 75, vorzugsweise 20 bis 70 Gew.-% 2-Buten, 5 bis 45, vorzugsweise 8 bis 35 Gew.-% 1-Buten, 1 bis 10, vorzugsweise 1 bis 5 Gew.-% Isobuten und 20 bis 1000, vorzugsweise 20 bis weniger als 300 Gew.-ppm Butadiene.

Eine weitere bevorzugte Ausführungsform der vorliegenden Erfindung umfasst im Anschuß an die Polymerisation des Isobutens eine Metathesereaktion, bei der man den aus der Isobuten-Polymerisation abgetrennten 2-Buten-reichen C₄-Reststrom in Gegenwart eines üblichen Metathesekatalysators mit Ethen in Kontakt bringt und aus dem dabei gebildeten Propen-haltigen Kohlenwasserstoffstrom das Propen abtrennt.

Um auch das im 2-Buten-reichen C₄-Reststrom noch enthaltene 2-Buten wirtschaftlich nutzen zu können, kann dieses in einer Metathesestufe in das höherwertige Monomer Propen umgewandelt werden. Hierzu erfolgt die stöchiometrische Zugabe (bezogen auf 2-Buten) von Ethen oder Ethen wird im Überschuss zugegeben. Eventuell im Strom noch enthaltenes 1-Buten oder Isobuten reagiert dabei zwar teilweise ebenfalls unter Bildung von höheren Olefinen (C₅ und C₆), diese können ausgeschleust oder aber in die Metathese rückgeführt werden, so dass kein oder nur ein geringer Nettoumsatz entsteht.

Falls der in der Metathesestufe gebildete Propen-haltige Kohlenwasserstoffstrom C₅- und C₆-Olefine enthält, werden diese vom Propen abgetrennt und üblicherweise zumindest in dem Umfang in die Metathesestufe zurückführt, dass das molare Verhältnis der Summe der nicht zurückgeführten C₅- und C₆-Olefine zu Propen maximal 0,2 : 1 beträgt.

Auch nicht umgesetztes 2-Buten und Ethen können gegebenenfalls in die Metathesestufe zurückgeführt werden, da die Metathesereaktion eine Gleichgewichtsreaktion ist.

Sowohl für die beschriebene Metathesereaktion mit dem aus der Isobuten-Polymerisation abgetrennten 2-Buten-reichen C₄-Reststrom als auch für die Metathese-Umsetzung eines Olefine enthaltenden Kohlenwasserstoffstromes zur Bereitstellung eines technischen C₄-Kohlenwasserstoffstromes für die Isobuten-Polymerisation kommen prinzipiell zwei verschiedene Katalysatortypen in Frage: Rhenium-haltige Katalysatoren, die bei Temperaturen im Bereich von 30 bis 150°C, vorzugsweise im Bereich von 35 bis 110°C betrieben werden, und Wolfram-haltige Rhenium-freie Katalysatoren, die in der Gasphase bei Temperaturen von 200 bis 600°C, vorzugsweise von 220 bis 450°C betrieben werden.

Die Rhenium-haltigen Katalysatoren enthalten vorzugsweise wenigstens 1 Gew.-% Re in oxidischer Form auf einem Träger, der zu wenigstens 75 Gew.-% aus einem hochoberflächigem Aluminiumoxid, insbesondere gamma-Aluminiumoxid, besteht. Bevorzugt sind vor allem Katalysatoren, die einen Re-Gehalt von 5 bis 12 Gew.-% aufweisen und auf reinem gamma-Aluminiumoxid geträgert sind. Die Katalysatoren können zur Steigerung der Aktivität auch noch zusätzlich Dotierstoffe enthalten, beispielsweise Oxide von Nb, Ta, Zr, Ti, Fe, Mn, Si, Mo oder W oder Phosphat oder Sulfat. Die Katalysatoren haben bevorzugt Oberflächen von wenigstens 100 m²/g und Porenvolumen von wenigstens 0,3 ml/g.

Geeignete Wolfram-haltige Rhenium-freie Katalysatoren enthalten bevorzugt wenigstens 3 Gew.-% W, zumindest teilweise in oxidischer Form, auf einem Träger ausgewählt aus der Gruppe Aluminiumoxide, Alumosilikate, Zeolithe oder insbesondere SiO₂. Die Katalysatoren weisen vorzugsweise eine Oberfläche von wenigstens 50 m²/g und ein Porenvolumen von wenigstens 0,3 ml/g auf. Die Aktivität bzw. Isomerisierungsaktivität kann durch geeignete Dotierungen verbessert werden, beispielsweise durch Alkali- und Erdalkalimetallverbindungen, TiO₂, ZrO₂, HfO₂ oder Verbindungen oder Elemente aus der Gruppe Ag, Sb, Mn, W, Mo, Zn und Si. Falls in der Metathese eine weitere Erhöhung des 1-Buten-Gehalts gewünscht ist, kann dem Wolfram-haltigen Rhenium-freien Katalystor auch ein Isomerisierungskontakt, beispielsweise ein Erdalkalimetalloxid, untergemischt werden. Das führt dazu, dass in der Metathese neben Propen auch eine zusätzliche Menge an 1-Buten generiert wird, die wiederum nach destillativer Abtrennung der Hydroformylierungsstufe zugeführt werden kann und hier die Kapazität erhöht.

Es ist dem Fachmann bekannt, dass alle Arten von Metathesekatalysatoren regelmäßig oxidativ regeneriert werden müssen. Hierzu wird entweder ein Aufbau mit Festbetten und wenigstens zwei Reaktoren gewählt, von denen sich immer wenigstens ein Reaktor im Regenerationsmodus befindet, oder es kann alternativ ein Wanderbettverfahren ausgeübt werden, bei dem desaktivierter Katalysator ausgeschleust und extern regeneriert wird.

Speziell bei Verwendung eines Rhenium-haltigen Katalysators kommt für die beschriebene Metathesereaktion mit dem aus der Isobuten-Polymerisation abgetrennten 2-Buten-reichen C₄-Reststrom auch die Ausführungsform der Reaktivdestillation in Betracht, bei der der Metathesekatalysator unmittelbar in der Destillationskolonne platziert wird. Diese Ausführungsform ist vor allem bei Anwesenheit größerer Mengen 1-Buten im Eingangsstrom gut geeignet. In diesem Fall werden nicht umgesetztes Ethen, Propen und 1-Buten über Kopf genommen, die schwereren Olefine verbleiben zusammen mit dem Katalysator im Sumpf. Gegebenenfalls muss für eine Ausschleusung von Inerten, etwa Butanen, gesorgt werden. Diese spezielle Art der Reaktionsführung erlaubt die Umwandlung von 2-Buten in Propen, ohne dass der 1-Buten-Gehalt verändert wird.

Die Aufarbeitung des in der Metathesestufe mit dem aus der Isobuten-Polymerisation abgetrennten 2-Buten-reichen C₄-Reststrom gebildeten Propen-haltigen Kohlenwasserstoffstroms erfolgt bevorzugt mittels Destillation. Die destillative Auftrennung der kann in mehreren nacheinander geschalteten Destillationsstufen erfolgen oder der in der Metathesestufe gebildete Propen-haltige Kohlenwasserstoffstrom kann an geeigneter Stelle in die Trennapparatur, die im Steamcracker gebildete Kohlenwasserstoffmischung in einzelne Fraktionen aufspaltet, eingespeist werden.

Falls aus dem Propen in einem anschließenden Schritt ein Polymeres hergestellt werden soll, wird das Propen weiter durch übliche Methoden gereinigt, damit hinsichtlich von Verunreinigungen die sog. polymer grade Spezifikation erreicht wird.

Für die gute Produktqualität des Polyisobutylens und auch für eine hohe Ausbeute an Propen in der sich gegebenenfalls anschließenden Metathesereaktion ist der erfindungsgemäße Konditionierungsschritt des bei der Isobuten-Polymerisation eingesetzten technischen C₄-Kohlenwasserstoffstroms mittels einem anorganischem Adsorptionsmittel, wie oben beschrieben, verantwortlich, welcher störende Oxygenate und gegebenenfalls auch Acetylene und/oder Diene (Diolefine) entfernt oder zumindest stark abreichert. Die absoluten Gehalte an Oxygenaten sollten nach dem Konditionierungsschritt in Summe weniger als 100 Gew.-ppm, vorzugsweise weniger als 50 Gew.-ppm, insbesondere weniger als 10 Gew.-ppm betragen. Die absoluten Gehalte an Acetylen und/oder Dienen (Diolefinen) sollten nach dem Konditionierungsschritt in Summe weniger als 300 Gew.-ppm, vorzugsweise weniger als 150 Gew.-ppm, insbesondere weniger als 100 Gew.-ppm betragen.

Die beschriebene Abreicherung der störenden Oxygenate in technischen C₄-Kohlenwasserstoffströmen kann prinzipiell bei jedem derartigen C₄-Strom vorgenommen werden, gleichgültig, wozu er danach verwendet wird. Deshalb ist auch Gegenstand der vorliegenden Erfindung ein Verfahren zur Verringerung des Gehaltes an Oxygenaten in einem technischen 1-Buten-, 2-Buten- und Isobuten-haltigen C₄-Kohlenwasserstoffstrom, der bis zu 3000 Gew.-ppm, vorzugsweise bis zu 1000 Gew.-ppm 1,3-Butadien enthalten kann, welches dadurch gekennzeichnet ist, dass man den C₄-Kohlenwasserstoffstrom bei einem Druck von 1 bis 40 bar auf eine Temperatur von weniger als 20°C, vorzugsweise weniger als 10°C, abkühlt, sich abscheidendes Wasser abtrennt und anschleißend mit einem anorganischen Adorptionsmittel bei einem Druck von 1 bis 40 bar und einer Temperatur von -40 bis +220°C, vorzugsweise -10 bis +150°C, in Kontakt bringt.

Vorzugsweise wird dieses Verfahren jedoch bei einem C₄-Kohlenwasserstoffstrom angewandt, den man nach dem Inkontaktbringen mit dem anorganischen Adsorptionsmittel zur Herstellung von Polyisobutylen mit einem Gehalt an endständigen Doppelbindungen von mehr als 50% durch Polymerisation von Isobuten unter Verwendung eines hierfür üblichen Polymerisationskatalysators einsetzt.

Die nachfolgenden Beispiele sollen die vorliegende Erfindung erläutern, ohne sie jedoch einzuschränken.

### Beispiele

In einem diskontinuierlichen Rührreaktor wurden Polymerisationen eines technischen Isobuten-haltigen C₄-Kohlenwasserstoffstromes der Zusammensetzung 45 Gew.-%

Isobuten, 22 Gew.-% 1-Buten, 12 Gew.-% 2-Buten und 21 Gew.-% Butane, der jeweils verschiedene Oxygenat-Verunreinigungen enthielt, bei -25°C mittels eines hierfür üblichen Bortrifluorid-Methanol-Katalysatorkomplexes zu Polyisobuten durchgeführt. Der C₄-Kohlenwasserstoffstrom wurde vor der Polymerisation jeweils mit dem gleichen Volumen n-Hexan verdünnt. Die Katalysatorkonzentration im Polymerisationsmedium betrug jeweils 0,5 Gew.-%. Das erhaltene Polyisobuten hatte jeweils ein zahlenmittleres Molekulargewicht von ca. 1000.

Die Oxygenat-Verunreinigungen wurde jeweils erfindungsgemäß durch Leiten des C₄-Kohlenwasserstoffstromes bei 20°C und 5 bar durch eine Adsorptionssäule (Absorberbett-Fahrweise), welche mit handelsüblichem basischen Aluminiumoxid (pH 9,5; Porenvolumen ca. 0,9 ml/g; innere Oberfläche ca. 150 m²/g; Partikelgröße 60 bis 150 µm) als anorganischem Adsorptionsmittel befüllt war, soweit entfernt, dass sie mit den übliche analytischen Methoden analytisch nicht mehr nachweisbar waren (B-Versuche). Der Umsatz an Isobuten wurde jeweils gravimetrisch bestimmt. Zum Vergleich wurden jeweils Polymerisationen durchgeführt (A-Versuche), bei denen der C₄-Kohlenwasser-stoffstrom eingesetzt wurde, der die Oxygenat-Verunreinigung noch enthielt. Die nachfolgende Tabelle zeigt die Ergebnisse der Bestimmungen.

| Versuch-Nr. | Oxygenat im C₄-Strom | [Gew.-ppm] | Isobuten-Umsatz [%] |
|---|---|---|---|
| 1 A | Pentanal | 20 | 63 |
| 1 B | nach Entfernung des Pentanals | | 72 |
| 2 A | Butanal | 35 | 54 |
| 2 B | nach Entfernung des Butanals | | 71 |
| 3 A | 1-Butanol | 50 | 17 |
| 3 B | nach Entfernung des 1-Butanols | | 70 |
| 4 A | Isobutanol | 35 | 61 |
| 4 B | nach Entfernung des Isobutanols | | 72 |
| 5 A | Wasser | 95 | 33 |
| 5 B | nach Entfernung des Wassers | | 71 |

Nach der erfindungsgemäßen Verringerung des Oxygenat-Gehaltes im C₄-Strom bis auf praktisch nicht mehr nachweisbare Restmengen läuft die Isobuten-Polymerisation bis zu einem Umsatz von 70 bis 72 % ab, wogegen bei Anwesenheit dieser Oxygenat-Verunreinigungen deutlich niedrigere Umsätze erzielt werden.

## Patentansprüche

1. Verfahren zur Herstellung von Polyisobutylen mit einem Gehalt an endständigen Doppelbindungen von mehr als 50% durch Polymerisation von Isobuten unter Verwendung eines hierfür üblichen Polymerisationskatalysators aus einem technischen 1-Buten-, 2-Buten- und Isobuten-haltigen C₄-Kohlenwasserstoffstrom, der bis zu 3000 Gew.-ppm, vorzugsweise bis zu 1000 Gew.-ppm 1,3-Butadien enthalten kann, **dadurch gekennzeichnet, dass** man den Gehalt an Oxygenaten im C₄-Kohlenwasserstoffstrom vor der Polymerisation des Isobutens durch Abkühlung bei einem Druck von 1-40 bar auf eine Temperatur von weniger als 20°C, vorzugsweise weniger als 10°C, Abtrennung von sich abscheiden dem Wasser und anschließendes Inkontaktbringen mit einem anorganischen Adorptionsmittel bei einem Druck von 1 bis 40 bar und einer Temperatur von -40 bis +220°C, vorzugsweise -10 bis +150°C, verringert.

2. Verfahren nach Anspruch 1, **dadurch gekennzeichnet, dass** das anorganische Adsorptionsmittel in Form eines Adsorberbettes vorliegt, welches Aluminiumoxide, Aluminiumhalogenide, Calciumoxide, Zirkoniumoxide, Titanoxide, Silikate, Alumosilikate, Zeolithe oder Mischungen hieraus enthält.

3. Verfahren nach den Ansprüchen 1 und 2, wobei man den bei der Polymerisation des Isobutens eingesetzten technischen C₄-Kohlenwasserstoffstrom bereitstellt, indem man
la) in Schritt Ia Naphtha oder sonstige Kohlenwasserstoffverbindungen einem Steamcracking- oder FCC-Prozess unterwirft und aus dem dabei gebildeten Stoffstrom eine C₄-Olefin-Mischung abzieht, die 1-Buten, 2-Buten, Isobuten und mehr als 1000 Gew.-ppm Butadiene und gegebenenfalls Butine enthält, und
IIa) aus der in Schritt Ia gebildeten C₄-Olefin-Mischung einen im wesentlichen aus 1-Buten, 2-Buten, Isobuten und ggf. Butanen bestehenden C₄-Kohlenwasserstoffstrom herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.

4. Verfahren nach den Ansprüchen 1 und 2, wobei man den bei der Polymerisation des Isobutens eingesetzten technischen C₄-Kohlenwasserstoffstrom bereitstellt, indem man
Ib) in Schritt Ib aus einem Butane enthaltenden Kohlenwasserstoffstrom durch Dehydrierung und nachfolgende Reinigung eine C₄-Olefin-Mischung herstellt, die 1-Buten, 2-Buten, Isobuten und mehr als 1000 Gew.-ppm Butadiene und gegebenenfalls Butine und gegebenenfalls Butane enthält, und
IIb) aus der in Schritt Ib gebildeten C₄-Olefin-Mischung einen im wesentlichen aus 1-Buten, 2-Buten, Isobuten und ggf. Butanen bestehenden C₄-Kohlenwasserstoffstrom herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.

5. Verfahren nach den Ansprüchen 1 und 2, wobei man den bei der Polymerisation des Isobutens eingesetzten technischen C₄-Kohlenwasserstoffstrom bereitstellt, indem man
Id) in Schritt Id aus einem Olefine enthaltenden Kohlenwasserstoffstrom durch Metathese-Umsetzung und nötigenfalls nachfolgende Reinigung eine C₄-Olefin-Mischung herstellt, die 1-Buten, 2-Buten, Isobuten und gegebenenfalls Butadiene und gegebenenfalls Butine enthält, und
IId) aus der in Schritt Id gebildeten C₄-Olefin-Mischung einen im wesentlichen aus 1-Buten, 2-Buten, Isobuten und gegebenenfalls Butanen bestehenden C₄-Kohlenwasserstoffstrom herstellt, indem man mittels Selektivhydrierung die Butadiene und Butine zu Butenen oder Butanen hydriert oder die Butadiene und Butine durch Extraktivdestillation soweit entfernt, dass der Gehalt an 1,3-Butadien maximal 1000 Gew.-ppm beträgt.

6. Verfahren nach den Ansprüchen 3 bis 5, wobei man, sofern der Gehalt an 1,3-Butadien in der gemäß Schritt Ia oder Schritt Ib oder Schritt Id gewonnenen C₄-Olefin-Mischung 5 Gew.-% oder mehr beträgt, den Gehalt an 1,3-Butadien mittels Extraktivdestillation auf einen Gehalt zwischen 1000 Gew.-ppm und 5 Gew.-% absenkt und den Gehalt an 1,3-Butadien anschließend mittels Selektivhydrierung weiter auf 1000 Gew.-ppm oder weniger absenkt.

7. Verfahren nach den Ansprüchen 3 bis 6, wobei man bei der Bereitstellung des bei der Polymerisation des Isobutens eingesetzten technischen C₄-Kohlenwasserstoffstromes als zusätzlichen Schritt III eine Hydroformylierung des aus Schritt IIa bzw. IIb bzw. IId gewonnenen C₄-Kohlenwasserstoffstromes in Gegenwart eines üblichen Hydroformylierungskatalysators mit Wasserstoff und Kohlenmonoxid durchführt und die dabei gebildeten C₅-Aldehyde vom resultierenden C₄-Kohlenwasserstoffstrom abtrennt.

8. Verfahren nach Anspruch 7, umfassend die weitere Umsetzung der im Hydroformylierungsschritt III gebildeten C₅-Aldehyde zu 2-Propylheptanol.

9. Verfahren nach einem der vorstehenden Ansprüche, umfassend im Anschluß an die Polymerisation des Isobutens eine Metathesereaktion, bei der man den aus der Isobuten-Polymerisation abgetrennten 2-Buten-reichen C₄-Reststrom in Gegenwart eines üblichen Metathesekatalysators mit Ethen in Kontakt bringt und aus dem dabei gebildeten Propen-haltigen Kohlenwasserstoffstrom das Propen abtrennt.

10. Verfahren zur Verringerung des Gehaltes an Oxygenaten in einem technischen 1-Buten-, 2-Buten- und Isobuten-haltigen C₄-Kohlenwas-serstoffstrom, der bis zu 3000 Gew.-ppm 1,3-Butadien enthalten kann, **dadurch gekennzeichnet, dass** man den C₄-Kohlenwasserstoffstrom bei einem Druck von 1 bis 40 bar auf eine Temperatur von weniger als 20°C, vorzugsweise von weniger als 10°C, abkühlt, sich abscheidendes Wasser abtrennt und anschließend mit einem anorganischen Adsorptionsmittel bei einem Druck von 1 bis 40 bar und einer Temperatur von -40 bis +220°C, vorzugsweise -10 bis +150°C, in Kontakt bringt.

## Claims

1. A process for preparing polyisobutylene having a content of terminal double bonds of more than 50% by polymerizing isobutene using a polymerization catalyst customary therefor from a technical 1-butene-, 2-butene- and isobutene-containing C₄ hydrocarbon stream which may comprise up to 3000 ppm by weight, preferably up to 1000 ppm by weight, of 1,3-butadiene, which comprises reducing the content of oxygenates in the C₄ hydrocarbon stream before the polymerization of the isobutene by cooling it at a pressure of 1-40 bar to a temperature of less than 20°C, preferably less than 10°C, removing water which separates out, and then contacting it with an inorganic adsorbent at a pressure of from 1 to 40 bar and a temperature of from -40 to +220°C, preferably from -10 to +150°C.

2. The process according to claim 1, wherein the inorganic adsorbent is present in the form of an adsorber bed which comprises aluminum oxides, aluminum halides, calcium oxides, zirconium oxides, titanium oxides, silicates, aluminosilicates, zeolites or mixtures thereof.

3. The process according to claims 1 and 2, wherein the technical C₄ hydrocarbon stream used in the polymerization of the isobutene is provided by
la) in step la, subjecting naphtha or other hydrocarbon compounds to a steamcracking or FCC process and, from the stream formed, removing a C₄ olefin mixture which comprises 1-butene, 2-butene, isobutene and more than 1000 ppm by weight of butadienes and possibly butynes, and
IIa) preparing from the C₄ olefin mixture formed in step la a C₄ hydrocarbon stream consisting essentially of 1-butene, 2-butene, isobutene and possibly butanes by hydrogenating the butadienes and butynes to butenes or butanes by means of selective hydrogenation, or removing the butadienes and butynes by extractive distillation to such an extent that the content of 1,3-butadiene is not more than 1000 ppm by weight.

4. The process according to claims 1 and 2, wherein the technical C₄ hydrocarbon stream used in the polymerization of isobutene is provided by
Ib) in step Ib, preparing from a hydrocarbon stream comprising butanes by dehydrogenation and subsequent purification, a C₄ olefin mixture which comprises 1-butene, 2-butene, isobutene and more than 1000 ppm by weight of butadienes and possibly butynes and possibly butanes, and
IIb) preparing from the C₄ olefin mixture formed in step Ib a C₄ hydrocarbon stream consisting essentially of 1-butene, 2-butene, isobutene and possibly butanes by hydrogenating the butadienes and butynes to butenes or butanes by means of selective hydrogenation, or removing the butadienes and butynes by extractive distillation to such an extent that the content of 1,3-butadiene is not more than 1000 ppm by weight.

5. The process according to claims 1 and 2, wherein the technical C₄ hydrocarbon stream used in the polymerization of the isobutene is prepared by
Id) in step Id, preparing from a hydrocarbon stream comprising olefins by metathesis conversion and, if necessary, subsequent purification a C₄ olefin mixture which comprises 1-butene, 2-butene, isobutene and possibly butadienes and possibly butynes, and
IId) preparing from the C₄ olefin mixture formed in step Id a C₄ hydrocarbon stream consisting essentially of 1-butene, 2-butene, isobutene and possibly butanes by hydrogenating the butadienes and butynes to butenes or butanes by means of selective hydrogenation, or removing the butadienes and butynes by extractive distillation to such an extent that the content of 1,3-butadiene is not more than 1000 ppm by weight.

6. The process according to claims 3 to 5, wherein, when the content of 1,3-butadiene in the C₄ olefin mixture obtained in step Ia or step Ib or step Id is 5% by weight or more, the content of 1,3-butadiene is lowered by means of extractive distillation to a content between 1000 ppm by weight and 5% by weight, and the content of 1,3-butadiene is then lowered by means of selective hydrogenation further to 1000 ppm by weight or less.

7. The process according to claims 3 to 6, wherein, in the provision of the technical C₄ hydrocarbon stream used in the polymerization of isobutene, as an additional step III, a hydroformylation of the C₄ hydrocarbon stream obtained from step IIa or IIb or IId is carried out in the presence of a customary hydroformylation catalyst with hydrogen and carbon monoxide, and the C₅ aldehydes formed are removed from the resulting C₄ hydrocarbon stream.

8. The process according to claim 7, comprising the further conversion of the C₅ aldehydes formed in the hydroformylation step III to 2-propylheptanol.

9. The process according to any of the preceding claims, comprising, after the polymerization of the isobutene, a metathesis reaction in which the 2-butene-rich C₄ residual stream removed from the isobutene polymerization is contacted with ethene in the presence of a customary metathesis catalyst and the propene is removed from the propene-containing hydrocarbon stream formed.

10. A process for reducing the content of oxygenates in a technical 1-butene-, 2-butene- and isobutene-containing C₄ hydrocarbon stream which may comprise up to 3000 ppm by weight of 1,3-butadiene, which comprises cooling the C₄ hydrocarbon stream at a pressure of from 1 to 40 bar to a temperature of less than 20°C, preferably of less than 10°C, removing water which separates out and then contacting the C₄ hydrocarbon stream with an inorganic adsorbent at a pressure of from 1 to 40 bar and a temperature of from -40 to +220°C, preferably from -10 to +150°C.

## Revendications

1. Procédé de fabrication de polyisobutylène ayant une teneur en doubles liaisons terminales supérieure à 50 % par polymérisation d'isobutène en utilisant un catalyseur de polymérisation usuel pour cela, à partir d'un courant technique d'hydrocarbures en C₄ contenant du 1-butène, du 2-butène et de l'isobutène, qui peut contenir jusqu'à 3 000 ppm en poids, de préférence jusqu'à 1 000 ppm en poids, de 1,3-butadiène, **caractérisé en ce que** la teneur en composés oxygénés dans le courant d'hydrocarbures en C₄ est réduite avant la polymérisation de l'isobutène par refroidissement à une pression de 1 à 40 bar à une température inférieure à 20 °C, de préférence inférieure à 10 °C, séparation de l'eau isolée, puis mise en contact avec un agent d'adsorption inorganique à une pression de 1 à 40 bar et à une température de -40 à +220 °C, de préférence de -10 à +150 °C.

2. Procédé selon la revendication 1, **caractérisé en ce que** l'agent d'adsorption inorganique se présente sous la forme d'un lit adsorbant qui contient des oxydes d'aluminium, des halogénures d'aluminium, des oxydes de calcium, des oxydes de zirconium, des oxydes de titane, des silicates, des alumosilicates, des zéolithes ou leurs mélanges.

3. Procédé selon les revendications 1 et 2, dans lequel le courant technique d'hydrocarbures en C₄ utilisé lors de la polymérisation de l'isobutène est préparé selon les étapes suivantes :
Ia) lors d'une étape Ia, du naphta ou d'autres composés hydrocarbonés sont soumis à un procédé de vapocraquage ou FCC et un mélange d'oléfines en C₄, qui contient du 1-butène, du 2-butène, de l'isobutène et plus de 1 000 ppm en poids de butadiènes et éventuellement des butynes, est soutiré du courant ainsi formé, et
IIa) à partir du mélange d'oléfines en C₄ formé à l'étape Ia, un courant d'hydrocarbures en C₄ essentiellement constitué de 1-butène, 2-butène, isobutène et éventuellement butanes est fabriqué en hydrogénant par hydrogénation sélective les butadiènes et les butynes en butènes ou butanes ou en éliminant les butadiènes et les butynes par distillation extractive jusqu'à ce que la teneur en 1,3-butadiène soit d'au plus 1 000 ppm en poids.

4. Procédé selon les revendications 1 et 2, dans lequel le courant technique d'hydrocarbures en C₄ utilisé lors de la polymérisation de l'isobutène est préparé selon les étapes suivantes :
Ib) lors d'une étape Ib, un mélange d'oléfines en C₄, qui contient du 1-butène, du 2-butène, de l'isobutène et plus de 1 000 ppm en poids de butadiènes et éventuellement des butynes et éventuellement des butanes, est fabriqué par déshydrogénation et purification ultérieure à partir d'un courant d'hydrocarbures contenant des butanes, et
IIb) à partir du mélange d'oléfines en C₄ formé à l'étape Ib, un courant d'hydrocarbures en C₄ essentiellement constitué de 1-butène, 2-butène, isobutène et éventuellement butanes est fabriqué en hydrogénant par hydrogénation sélective les butadiènes et les butynes en butènes ou butanes ou en éliminant les butadiènes et les butynes par distillation extractive jusqu'à ce que la teneur en 1,3-butadiène soit d'au plus 1 000 ppm en poids.

5. Procédé selon les revendications 1 et 2, dans lequel le courant technique d'hydrocarbures en C₄ utilisé lors de la polymérisation de l'isobutène est préparé selon les étapes suivantes :
Id) lors d'une étape Id, un mélange d'oléfines en C₄, qui contient du 1-butène, du 2-butène, de l'isobutène et éventuellement des butadiènes et éventuellement des butynes, est fabriqué par réaction de métathèse et si nécessaire purification ultérieure à partir d'un courant d'hydrocarbures contenant des oléfines, et
IId) à partir du mélange d'oléfines en C₄ formé à l'étape Id, un courant d'hydrocarbures en C₄ essentiellement constitué de 1-butène, 2-butène, isobutène et éventuellement butanes est fabriqué en hydrogénant par hydrogénation sélective les butadiènes et les butynes en butènes ou butanes ou en éliminant les butadiènes et les butynes par distillation extractive jusqu'à ce que la teneur en 1,3-butadiène soit d'au plus 1 000 ppm en poids.

6. Procédé selon les revendications 3 à 5, dans lequel si la teneur en 1,3-butadiène dans le mélange d'oléfine en C₄ obtenu selon l'étape Ia ou l'étape Ib ou l'étape Id est de 5 % en poids ou plus, la teneur en 1,3-butadiène est abaissée à une teneur comprise entre 1 000 ppm en poids et 5 % en poids par distillation extractive, et la teneur en 1,3-butadiène est ensuite davantage abaissée à 1 000 ppm en poids ou moins par hydrogénation sélective.

7. Procédé selon les revendications 3 à 6, dans lequel une hydroformylation du courant d'hydrocarbures en C₄ obtenu lors de l'étape IIa, IIb ou IId est réalisée en présence d'un catalyseur d'hydroformylation usuel avec de l'hydrogène et du monoxyde de carbone en tant qu'étape III supplémentaire lors de la préparation du courant technique d'hydrocarbures en C₄ utilisé lors de la polymérisation de l'isobutène, et les aldéhydes en C₅ ainsi formés sont séparés du courant d'hydrocarbures en C₄ résultant.

8. Procédé selon la revendication 7, comprenant la réaction supplémentaire des aldéhydes en C₅ formés lors de l'étape d'hydroformylation III en 2-propylheptanol.

9. Procédé selon l'une quelconque des revendications précédentes, comprenant après la polymérisation de l'isobutène une réaction de métathèse, lors de laquelle le courant résiduel en C₄ riche en 2-butène séparé de la polymérisation de l'isobutène est mis en contact avec de l'éthène en présence d'un catalyseur de métathèse usuel et le propène est séparé du courant d'hydrocarbures contenant du propène ainsi formé.

10. Procédé de réduction de la teneur en composés oxygénés d'un courant technique d'hydrocarbures en C₄ contenant du 1-butène, du 2-butène et de l'isobutène, qui peut contenir jusqu'à 3 000 ppm en poids de 1,3-butadiène, **caractérisé en ce que** le courant d'hydrocarbures en C₄ est refroidi à une pression de 1 à 40 bar à une température inférieure à 20 °C, de préférence inférieure à 10 °C, l'eau isolée est séparée, puis il est mis en contact avec un agent d'adsorption inorganique à une pression de 1 à 40 bar et à une température de -40 à +220 °C, de préférence de -10 à +150 °C.
